# EUROPÄISCHE PATENTSCHRIFT

(11) **EP 2 670 055 B1**
(45) Veröffentlichungstag und Bekanntmachung des Hinweises auf die Patenterteilung: **13.04.2016**
(21) Anmeldenummer: 13002026.6
(22) Anmeldetag: 17.04.2013
(51) Int. Cl.: H04B 1/38, B60R 11/02, H04B 1/3822, H04M 1/02, B60R 11/00

(54) **Mobiltelefonintegrationssystem**
Mobile phone integration system
Système d'intégration de téléphone mobile

(30) Priorität: 30.05.2012 DE 102012010600; 22.10.2012 DE 102012020577; 15.03.2013 DE 102013004442
(43) Veröffentlichungstag der Anmeldung: 04.12.2013
(73) Patentinhaber: Peiker acustic GmbH & Co. KG, 61381 Friedrichsdorf (DE)
(72) Erfinder: Lachnitt, Jens, 36304 Alsfeld (DE)
(74) Vertreter: Otten, Roth, Dobler & Partner mbB Patentanwälte

(56) Entgegenhaltungen:
- WO-A1-2004/039628
- WO-A1-2008/097032
- DE-U1- 20 010 532
- DE-U1- 20 011 311
- DE-U1-202011 106 185
- US-A1- 2011 132 950

## Beschreibung

Die Erfindung betrifft ein Mobiltelefonintegrationssystem gemäß dem Oberbegriff des Anspruchs 1.

Aus der EP 2 125 434 B1 ist ein Mobiltelefonintegrationssystem bekannt, welches einen Adapter und eine Haltevorrichtung umfasst, wobei der Adapter eine Auflagefläche umfasst, wobei auf der Auflagefläche ein Mobiltelefon ablegbar ist, wobei die Haltevorrichtung an einem Fahrzeug befestigt ist, wobei der Adapter an der Haltevorrichtung lösbar gehalten ist und einen Grundkörper umfasst, wobei der Adapter wenigstens eine Schnittstelle zu dem Mobiltelefon umfasst. Derartige als Aufnahmevorrichtung ausgebildete Adapter sind hierbei speziell auf unterschiedliche Mobiltelefone angepasst.

Aus der DE 20 2011 106 185 U1 ist ein Befestigungshalter für ein tragbares elektronisches Gerät bekannt, wobei der Halter eine Basis zur Aufnahme des elektronischen Geräts, ein oberes Teil und ein unteres Teil, welches das obere Teil verlängert, umfasst, wobei ein Rückhalteorgan zwischen einer Ruhestellung und einer aktiven Stellung bewegbar ist, wobei das Rückhalteorgan in seiner aktiven Stellung mit einem Seitenrand des elektronischen Geräts in Kontakt steht.

Aus der WO 2008/097032 A1 ist eine Vielzweck-Mobiltelefonstation bekannt, wobei diese einen Grundkörper, ein Paar Führungen und eine Befestigungsabdeckung umfasst und wobei die an den Führungen angeordnete Befestigungsabdeckung dafür ausgebildet ist, ein Mobiltelefon elastisch zu überdecken, welches auf einer Oberseite des Grundkörpers platziert ist.

Aus der DE 200 11 311 U1 ist ein verbesserter Aufbau eines Mobiltelefonlautsprechers sowie eines Ladegeräts bekannt, wobei an einem Grundkörper eine Klemmeinrichtung zur Halterung eines Mobiltelefons in einer vorgesehen Lage vorhanden ist.

Aus der DE 200 10 532 U1 ist eine verbesserte Struktur einer Mobiltelefonbefestigung bekannt, wobei diese zwei Klemmstücke umfasst, wobei die Klemmstücke mit einem Basisrahmen gekoppelt sind, welcher durch das Gewicht eines Mobiltelefons auf die Klemmstücke einwirkt und diese gegen das Mobiltelefon drückt.

Aus der DE 10 2011 054 346 B3 ist ein Halter für ein elektronisches Gerät wie zum Beispiel ein Mobiltelefon nach der Gattung des Patentanspruchs 1 bekanntgeworden, bei welchem ein Mobiltelefon durch zwei endseitige Haltebügel in der Halterung gehalten ist. Aufgrund des jeweils endseitigen kurzen Übergriffs der Haltebügel ist ein Bügel federbeaufschlagt um das Mobiltelefon zu fixieren. Die Anordnung von zwei endseitigen Übergreifbügeln ist konstruktiv aufwendig und bezüglich der Abmaße von verschiedenen Mobilfunktelefonen wenig flexibel.

Der Erfindung liegt die Aufgabe zugrunde, ein Mobiltelefonintegrationssystem entwickeln, bei welchem eine Vielzahl von unterschiedlichen Mobiltelefonen durch einen einzigen Adapter zuverlässig, einfach und flexibel in einem Fahrzeug gehalten wird.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei dem erfindungsgemäßen Mobiltelefonintegrationssystem umfasst der Adapter eine Spange, welche von einem Rand des Grundkörpers aus in einer Spannstellung unter Vorspannung in Richtung der Auflagefläche derart über die Auflagefläche ragt, dass ein Mobiltelefon zwischen ein freies Ende der Spange und die Auflagefläche in eine Haltestellung einschiebbar ist, wobei das Mobiltelefon in der Haltestellung zwischen der Spange und der Auflagefläche durch die auf das Mobiltelefon drückende Spange derart fixiert ist, dass dieses in der Haltestellung auch im Fahrbetrieb des Fahrzeugs verschiebesicher gehalten ist. Durch einen derartigen Adapter wird das Mobiltelefon durch einen auf das Display ausgeübten Druck mit seiner dem Display gegenüber liegenden Rückseite auf die Auflagefläche des Adapters gedrückt und so an dem Adapter fixiert. Gegenüber bekannten Halterungen ist es vorteilhaft, durch eine auf das Display wirkende Haltekraft auf die Erforderlichkeit eines Zugriffs auf die Schmalseiten bzw. Seitenwände des Mobiltelefons zu verzichten und so das Mobiltelefonintegrationssystem unabhängig von Längen- und Breitenabmessungen des Mobiltelefons zu machen und hierdurch eine Vielzahl unterschiedlicher Mobiltelefone mit ein und demselben Adapter im Fahrzeug fixieren zu können. Weiterhin ist es vorteilhaft, ein Mobiltelefonintegrationssystem bereit zu stellen, welches zur Fixierung des einzelnen Mobiltelefons grundsätzlich nur eine Toleranz hinsichtlich einer Dickenabmessung des Mobiltelefons aufweisen muss, um den Vorteil zu nutzen, dass sich die Dicken der meisten modernen Mobiltelefone in einem engen Toleranzbereich bewegen und insbesondere in einem Bereich von etwa 0,5 cm bis etwa 2 cm liegen.

Kern der Erfindung ist es, die Spange mit ihrem freien Ende bis in einen Mittelbereich der Auflagefläche ragen zu lassen, wobei die Spange insbesondere punktförmig oder linienförmig oder flächig an dem auf der Auflagefläche liegenden Mobiltelefon anliegt. Durch eine derartige Auslegung der Spange ist es möglich, sowohl die Spange so zu dimensionieren, dass sie vom Anwender gehandhabt werden kann. Weiterhin wird durch eine derartige Auslegung auch ein Zugang zu einem über der Auflagefläche liegenden Aufnahmeraum geschaffen, so dass das Mobiltelefon von außen unter die Spange geschoben werden kann.

Die Erfindung sieht weiterhin vor, eine erste Schnittstelle des Adapters als Ladeschnittstelle auszubilden, wobei die Ladeschnittstelle als drahtlose Ladeschnittstelle ausgebildet ist, über welche drahtlos elektrische Energie von einer induktiven Ladeeinheit des Adapters an eine Empfängerspule des Mobiltelefons übertragbar ist oder wobei die Ladeschnittstelle als drahtgebundene Ladeschnittstelle ausgebildet ist, welche ein mit einem Stecker ausgestattetes Ladekabel umfasst, welches derart aus dem Adapter geführt ist, dass mit dem Stecker unterschiedliche Steckpositionen erreichbar sind. Durch eine derartige Ausbildung der Ladeschnittstelle ist eine Stormversorgung des Mobiltelefons sicher gestellt, so dass dieses auch über längere Zeiträume im Fahrzeug betrieben werden kann.

Erfindungsgemäß ist es auch vorgesehen, eine zweite Schnittstelle des Adapters als Antennenkoppelschnittstelle auszubilden, über welche Antennensignale einer Koppelantenne des Adapters von dem Mobiltelefon empfangbar und an das Mobiltelefon übertragbar sind. Hierbei ist es vorgesehen, diese als drahtgebundene oder drahtlose Koppelschnittstelle auszuführen. Durch eine derartige zweite Schnittstelle ist das Mobiltelefonintegrationssystem auch für Fahrzeuge mit bedampften Scheiben geeignet, bei welchen zwingend eine Außenantenne verwendet werden muss, um mit hinreichender Qualität senden und empfangen zu können.

Entsprechend der Erfindung ist es auch vorgesehen, entweder die Spange drehfest an dem Grundkörper anzuordnen und die Vorspannung der Spange durch einen elastische Verformung der Spange bei eingelegtem Mobiltelefon zu erzeugen oder die Spange schwenkbar um eine Drehachse an dem Grundkörper anzuordnen, wobei der Adapter ein Spannmittel umfasst, welches zwischen dem Grundkörper des Adapter und der Spange angeordnet ist und die Vorspannung erzeugt. Beide Bauformen ermöglichen es, den erforderlichen Druck auf das Mobiltelefon mit einfachen Mitteln zu realisieren.

Die Erfindung sieht auch vor, dass die Spange, aus der Spannstellung heraus um ihre eine Drehachse in eine Freigabestellung schwenkbar ist. Hierdurch werden ein Einlegen und eine Entnahme, insbesondere von größeren Mobiltelefonen erleichtert. Erfindungsgemäß ist es ergänzend vorgesehen, die Spange durch Überwindung einer die Spange in der Freigabestellung haltenden Kraft in Öffnungsrichtung noch weiter um die Drehachse zu schwenken. Hierdurch wird einer Überbelastung der Spange durch eine versehentliche Belastung oder Betätigung der in der Freigabestellung stehenden Spange entgegen einer Schließrichtung wirksam vermieden, da die Spange beschädigungsfrei nachgeben bzw. ausweichen kann.

Die Erfindung sieht auch vor, den Adapter mit einem Dämpfungsmittel, welches als Bremsmittel dient, auszustatten, wobei diese bei einer Bewegung der Spange aus der Freigabestellung in die Spannstellung derart gegen eine Schließkraft des Spannmittels wirkt, dass die Bewegungsgeschwindigkeit der Spange zu der Spannstellung hin reduziert wird. Hierdurch wird ein Aufschlagen der Spange auf dem Mobiltelefon beim Schwenken der Spange in die Schließstellung wirksam verhindert.

Die Erfindung sieht auch vor, eine zweite drahtgebundene Koppelschnittstelle an dem Adapter auszubilden, welche ein mit einem Stecker ausgestattetes Antennenkabel umfasst, welches derart aus dem Adapter geführt ist, dass mit dem Stecker unterschiedliche Steckpositionen erreichbar sind. Hierdurch ist kostengünstig auch einen Antennenanbindung realisierbar, sofern das verwendete Mobiltelefon einen Antennenanschluss aufweist.

Weiterhin sieht die Erfindung vor, den Grundkörper mit einer elastisch verformbaren Matte auszubilden, welche die Auflagefläche wenigstens teilweise bildet. Hierdurch ist es möglich, das Mobiltelefon vor Vibrationen aus dem Fahrzeug zu schützen und auch bezüglich eines von der Spange ausgeübten Drucks abzupolstern.

Es ist auch vorgesehen, die Drehachse (315) der Spange (309) derart in Fahrtrichtung des Fahrzeugs oder etwa in Fahrtrichtung, das heißt mit einer Abweichung von maximal 30° zu der Fahrtrichtung des Fahrzeugs auszurichten, dass das in den Aufnahmeraum einlegbare Mobiltelefon von der Schwerkraft in Richtung der Drehachse der Spange gezogen wird. Hierdurch lässt sich die Haltekraft, mit welcher die Spange auf das Mobiltelefon einwirken muss niedrig halten, da diese nur ein Verrutschen des Mobiltelefons verhindern muss, aber die von der Schwerkraft ausgehende Belastung im Wesentlichen durch die unbeweglichen Teile des Adapters aufgenommen wird.

Gemäß einer Ausführungsvariante ist es vorgesehen, den Adapter mit einer dritten Schnittstelle auszubilden, welche eine drahtlose Datenkommunikationseinrichtung umfasst, wobei über die Datenkommunikationseinrichtung eine drahtlose Datenkommunikationsverbindung mit einem in dem Fahrzeug und insbesondere in dem Adapter befindlichen Mobiltelefon bereitgestellt ist und wobei die Datenkommunikationseinrichtung zur weiteren Datenkommunikation an eine Elektronik des Fahrzeugs angeschlossen ist. Hierdurch ist es möglich, das Mobiltelefon mit dem Fahrzeug zu verbinden und dieses beispielsweise durch im Fahrzeug angeordnete Bedienungsmittel zu bedienen und/oder im Mobiltelefon gespeicherte Daten auf Anzeigemitteln des Fahrzeugs anzuzeigen.

Für die die Datenkommunikation zwischen der Datenkommunikationseinrichtung und der Elektronik des Fahrzeugs ist eine drahtgebunde oder eine drahtlose Datenkommunikation vorgesehen, wobei eine drahtgebundene Datenkommunikationsverbindung durch eine Kabelverbindung nach dem USB-Standard gebildet ist bzw. wobei eine drahtlose Datenkommunikationsverbindung durch eine Funkverbindung gebildet ist. Hierdurch kann den technischen Anforderungen unterschiedlich ausgebildeter Fahrzeuge entsprochen werden.

Schließlich ist es vorgesehen, die drahtlose Datenkommunikationsverbindung nach dem sogenannten WIFI-Standard bzw. entsprechend dem Standard IEEE 802.11 zu betreiben. Hierdurch sind hohe Datenübertragungsraten und eine verschlüsselte Datenkommunikation möglich.

Ein vollständig drahtloser Anschluss des Mobiltelefons bezüglich Antennensignal, Stromversorgung und wechselseitiger Daten- und Befehlsübergabe an den Adapter ermöglicht eine mechanische Ausführung des Adapters, welche für eine Vielzahl von Mobiltelefonen mit unterschiedlichen Gehäuseformen und/oder unterschiedlichen Anschlussbuchsen geeignet ist, da durch den Adapter kein Stecker zur elektrischen Kontaktierung des eingelegten Mobiltelefons bereitgestellt werden muss.

Unter einem Ladekabel wird im Sinne der Erfindung jedes Kabel verstanden, welches geeignet ist, das Mobiltelefon mit Strom zu versorgen, wobei das Ladekabel in einer Ausführungsvariante auch Datenleitungen und/oder Steuerleitungen umfasst.

Weitere Einzelheiten der Erfindung werden in der Zeichnung anhand von schematisch dargestellten Ausführungsbeispielen beschrieben.

Hierbei zeigt:
- Figur 1:: eine teilweise geschnittene Seitenansicht einer ersten Ausführungsvariante eines erfindungsgemäßen Mobiltelefonintegrationssystems, bei welchem eine Spange in einer Spannstellung steht;
- Figur 2:: eine zweite Seitenansicht der ersten Ausführungsvariante, wobei die Spange in einer Freigabestellung steht;
- Figur 3:: eine dritte Seitenansicht der ersten Ausführungsvariante, wobei die Spange in einer Überlaststellung steht.
- Figur 4:: eine Draufsicht auf die erste Ausführungsvariante, wobei die Spange in der Spannstellung steht;
- Figur 5:: eine teilweise geschnittene Seitenansicht einer zweiten Ausführungsvariante eines erfindungsgemäßen Mobiltelefonintegrationssystems, bei welchem eine Spange drehfest an einem Grundkörper eines Adapters angeordnet ist;
- Figur 6 und 7:: zwei weitere Seitenansichten der zweiten Ausführungsvariante;
- Figur 8:: eine teilweise geschnittene Seitenansicht einer dritten Ausführungsvariante eines erfindungsgemäßen Mobiltelefonintegrationssystems, bei welchem eine Spange in einer Spannstellung steht,
- Figur 9, 10:: eine perspektivische Ansicht und eine Seitenansicht einer vierten Ausführungsvariante eines erfindungsgemäßen Mobiltelefonintegrationssystems und
- Figur 11:: eine perspektivische Ansicht einer Anordnung der vierten Ausführungsvariante an einer Mittelkonsole.

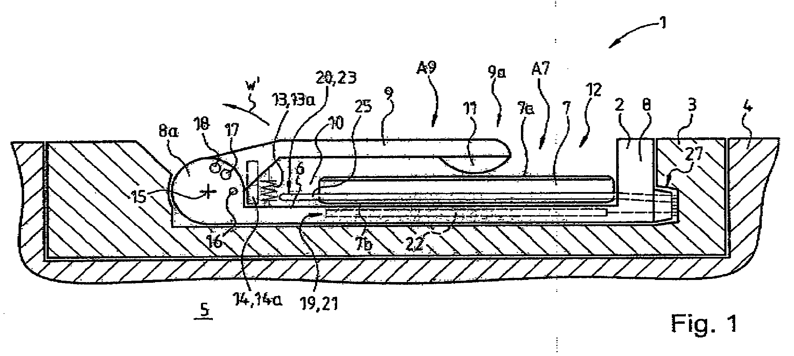

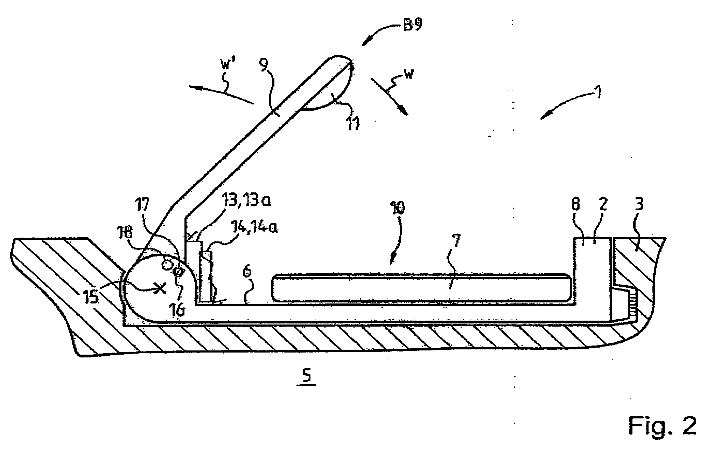

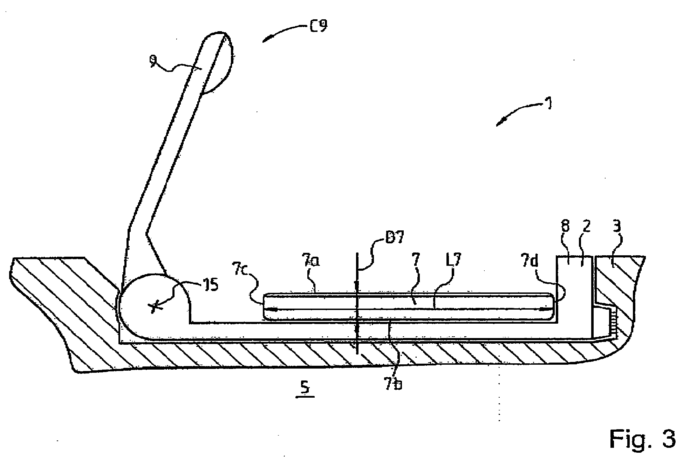

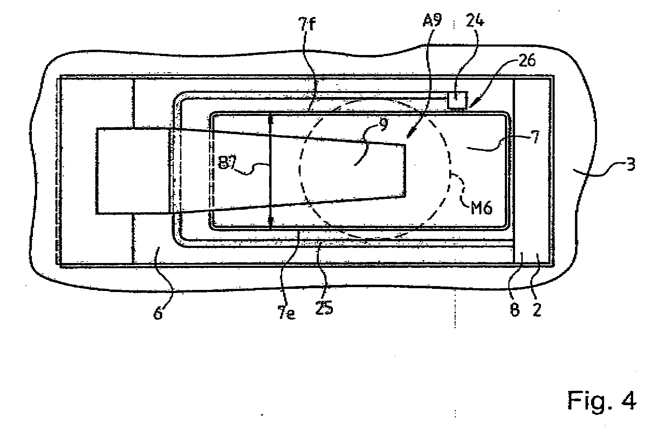

In der Figur 1 ist eine teilweise geschnittene Seitenansicht einer ersten Ausführungsvariante eines erfindungsgemäßen Mobiltelefonintegrationssystems 1 gezeigt. Das Mobiltelefonintegrationssystem 1 umfasst einen Adapter 2 und eine Haltevorrichtung 3, wobei die Haltevorrichtung 3 in einer Konsole 4 eines Fahrzeugs 5 aufgenommen ist. Die Konsole 4 und die Haltervorrichtung 3 sind geschnitten dargestellt, um den Adapter 2 in Seitenansicht zeigen zu können. Der Adapter 2 umfasst eine Auflagefläche 6, auf welcher ein Mobiltelefon 7 abgelegt ist. Das Mobiltelefon 7 weist mit einem Display 7a nach oben und weist mit einer dem Display 7a gegenüber liegenden Rückseite 7b zu der Auflagefläche 6. Der Adapter 2 ist an der Haltevorrichtung 3 lösbar fixiert und kann von dieser getrennt werden. Der Adapter 2 umfasst einen Grundkörper 8 und eine Spange 9, welche von einem Rand 8a des Grundkörper 8 aus in einer in der Figur 1 gezeigten Spannstellung A9 unter Vorspannung in Richtung der Auflagefläche 6 derart mit einem Anlagemittel 11 über die Auflagefläche 6 in einen Aufnahmeraum 10 für das Mobiltelefon 7 ragt. Hierbei ist das Mobiltelefon 7 durch einen Zugang 12 in den Aufnahmeraum 10 zwischen ein freies Ende 9a der Spange 9 und die Auflagefläche 6 in eine gezeigte Haltestellung A7 einschiebbar. In dieser Haltestellung A7, in welcher das Mobiltelefon 7 mit seiner Rückseite 7b auf der Auflagefläche 6 des Adapters 2 aufliegt, ist das Mobiltelefon 7 zwischen der Spange 9 und der Auflagefläche 6 durch die mit dem Anlagemittel 11 auf das Display 7a des Mobiltelefons 7 drückende Spange 9 fixiert. Diese Spange 9 hält das Mobiltelefon 7 in der gezeigten Haltestellung A7 auch im Fahrbetrieb des Fahrzeugs 5 verschiebesicher in dem Adapter 2. Die Spange 9 wir von einem Spannmittel 13, welches als Feder 13a ausgebildet ist, in die in der Figur 1 gezeigte Spannstellung A9 gezogen. Parallel zu dem Spannmittel 13 wirkt auch ein Dämpfungsmittel 14, welches als kompressibler Schaumstoffklotz 14a ausgebildet ist, auf die Spange 9. Die Spange 9 ist um eine Drehachse 15 schwenkbar an dem Grundkörper 8 angelenkt und umfasst einen Rastkopf 16, welcher bei einer Drehung der Spange 9 aus der gezeigten Spannstellung A9 gegen die Kraft des Spannmittels 13 in eine Drehrichtung w' mit an dem Grundkörper 8 ausgebildeten Rastmulden 17 oder 18 zusammenwirkt, wenn eine in der Figur 2 gezeigte Freigabestellung B9 oder eine in der Figur 3 gezeigte Überlaststellung C9 erreicht ist. Die schematisch dargestellten Komponenten 13, 14 und 16 bis 18 sind nur noch in der Figur 2 gezeigt. In der Figur 3 wurde zur Erhaltung der Übersichtlichkeit auf eine Darstellung dieser Komponenten verzichtet. In den Figuren 2 und 3 wurde auch auf eine Darstellung der Konsole des Fahrzeugs verzichtet. Abweichend von den Figuren 2 und 3 zeigt die Figur 1 auch eine erste Schnittstelle 19, 20 in zwei unterschiedlichen Ausführungsformen, welche bei dem erfindungsgemäßen Mobiltelefonintegrationssystems 1 alternativ oder kumulativ verwirklicht sein können. Hierbei wird die erste Ausführungsvariante der ersten Schnittstelle 19 als drahtlose Ladeschnittstelle 21 ausgeführt. Diese Ladeschnittstelle 21 umfasst eine in dem Adapter 2 verbaute induktive Ladeeinheit 22, zu welcher ein geeignetes Mobiltelefon eine nicht dargestellte Empfängerspule aufweist. Hierbei ist die zweite Ausführungsvariante der ersten Schnittstelle 20 als drahtgebundene Ladeschnittstelle 23 ausgeführt. Diese umfasst - wie auch aus der in der Figur 4 gezeigten Draufsicht auf die Figur 1 ersichtlich ist - einen Stecker 24 und ein Ladekabel 25, wobei der Stecker 24 auf eine nicht näher dargestellte Steckbuchse 26 des Mobiltelefons 7 angepasst ist. Eine Stromversorgung von dem Fahrzeug 5 her erfolgt über die Haltevorrichtung 3, welche mit dem Adapter 2 über eine elektrische Steckverbindung 27 verbunden ist.

In der Figur 2 ist - wie bereits erwähnt - eine zweite Seitenansicht der ersten Ausführungsvariante des Mobiltelefonintegrationssystems 1 gezeigt, wobei die Spange 9 in der Freigabestellung B9 steht, in welcher das Mobiltelefon 7 problemlos aus dem über der Auflagefläche 6 liegenden Aufnahmeraum 10 genommen werden kann und umgekehrt auch problemlos in den Aufnahmeraum 10 eingelegt werden kann. In der Figur 2 ist erkennbar wie der Rastkopf 16 in der Freigabestellung B9 der Spange 9 in der Rastmulde 17 aufgenommen ist. Aus der Freigabestellung B9 kann diese Spange 9 nunmehr um ihrer Drehachse 15 wieder in die in der Figur 1 gezeigte Spannstellung A9 geschwenkt werden. Wobei die Spange 9 nach einer manuellen Überwindung der Haltekraft, welche die Spange 9 über den Rastkopf 16 an dem Grundkörper 8 erfährt, von dem Federelement 14 in Drehrichtung w um die Drehachse 15 geschwenkt wird. Um ein Aufschlagen der Spange 9 mit ihrem Anlagemittel 11 auf dem Display 7a des Mobiltelefons 7 zu verhindern, wird die Drehgeschwindigkeit der Spange 9 durch das Dämpfungsmittel 14 vor dem Auftreffen des Anlagemittels 11 der Spange 9 auf dem Display 7a reduziert, da das Spannmittel 13 zusätzlich eine Kraft zur Überwindung der Gegenkraft des Dämpfungselements 14 aufbringen muss.

In der Figur 3 ist - wie bereits erwähnt - eine dritte Seitenansicht der ersten Ausführungsvariante des Mobiltelefonintegrationssystems 1 gezeigt, wobei die Spange 9 in der Überlaststellung C9 steht, in welche die Spange 9 gebracht wird, wenn diese versehentlich in der Freigabestellung B9 in die Drehrichtung w' bewegt wird. Die Überlaststellung C9 dient auch als Reinigungs- und Wartungsstellung. Das Mobiltelefon 7 weist eine zwischen dem Display 7a und der Rückseite 7b gemessene Dicke D7 und eine zwischen einer oberen Seitenwand 7c und einer unteren Seitenwand 7d gemessene Länge L7 auf.

In der Figur 4 ist - wie bereits erwähnt - eine Draufsicht auf die Darstellung der Figur 1 gezeigt, wobei die Spange 9 in der Spannstellung A9 steht und das Mobiltelefon 7 auf die Auflagefläche 6 drückt. Das Mobiltelefon 7 weit eine zwischen einer linken Seitenwand 7e und einer rechten Seitenwand 7f gemessene Breite B7 auf. Die Auflagefläche 6 ist derart bemessen, dass Mobiltelefone mit unterschiedlichen Längen- und Breitenabmessungen auf dieser ablegbar sind. Unterschiedliche Dicken unterschiedlicher Mobiltelefone werden durch unterschiedliche Spannstellungen der Spange 9 toleriert. Aus der Draufsicht ist erkennbar, wie das freie Ende 9a der Spange 9 bzw. das Anlagemittel 11 der Spange 9 in einen Mittelbereich M6 der Auflagefläche 6 ragt.

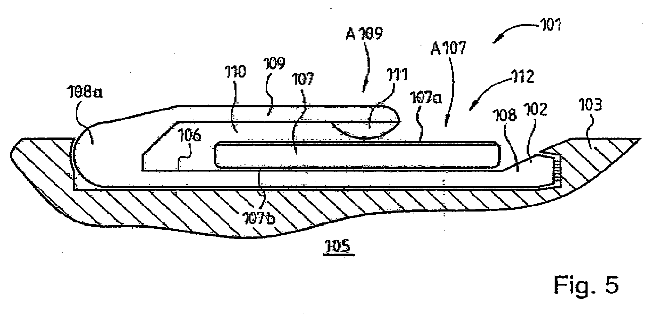

In der Figur 5 ist eine teilweise geschnittene Seitenansicht einer zweiten Ausführungsvariante eines erfindungsgemäßen Mobiltelefonintegrationssystems 101 gezeigt. Das Mobiltelefonintegrationssystem 101 umfasst einen Adapter 102 und eine Haltevorrichtung 103, wobei die Haltevorrichtung 103 in einer nicht dargestellten Konsole eines Fahrzeugs 105 aufgenommen ist. Die Haltervorrichtung 103 ist geschnitten dargestellt, um den Adapter 102 in Seitenansicht zeigen zu können. Der Adapter 102 umfasst eine Auflagefläche 106, auf welcher ein Mobiltelefon 107 abgelegt ist. Das Mobiltelefon 107 weist mit einem Display 107a nach oben und weist mit einer dem Display 107a gegenüber liegenden Rückseite 107b zu der Auflagefläche 106. Der Adapter 102 ist an der Haltevorrichtung 103 lösbar fixiert und kann von dieser getrennt werden. Der Adapter 102 umfasst einen Grundkörper 108 und eine Spange 109, welche von einem Rand 108a des Grundkörper 108 aus in einer in der Figur 5 gezeigten Spannstellung A109 unter Vorspannung in Richtung der Auflagefläche 106 mit einem Anlagemittel 111 über die Auflagefläche 106 in einen Aufnahmeraum 110 für das Mobiltelefon 107 ragt. Im Unterschied zu der in den Figuren 1 bis 4 gezeigten ersten Ausführungsvariante ist die Spange 109 bei der zweiten Ausführungsvariante drehfest an dem Grundkörper 108 eines Adapters 102 angeordnet. Hierbei ist das Mobiltelefon 107 durch einen Zugang 112 in den Aufnahmeraum 110 zwischen ein freies Ende 109a der Spange 109 und die Auflagefläche 106 in eine gezeigte Haltestellung A107 einschiebbar. In dieser Haltestellung A107, in welcher das Mobiltelefon 107 mit seiner Rückseite 107b auf der Auflagefläche 106 des Adapters 102 aufliegt, ist das Mobiltelefon 107 zwischen der Spange 109 und der Auflagefläche 106 durch die mit dem Anlagemittel 111 auf das Display 107a des Mobiltelefons 107 drückende Spange 109 fixiert. Diese Spange 109 hält das Mobiltelefon 7 in der gezeigten Haltestellung A107 auch im Fahrbetrieb des Fahrzeugs 5 verschiebesicher in dem Adapter 102.

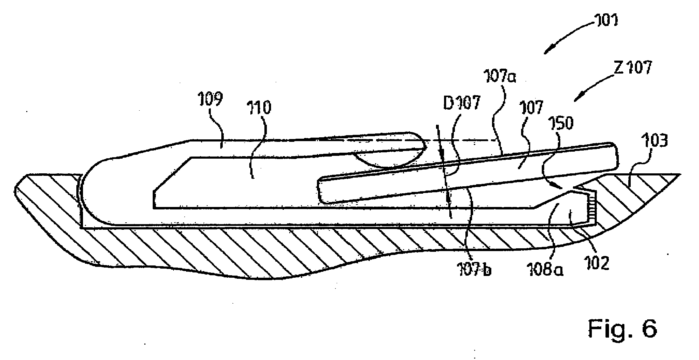

In der Figur 6 ist dargestellt, wie das Mobiltelefon 107 aus der Haltestellung A107 über eine Zwischenstellung Z107 unter elastischer Verformung bzw. Durchbiegung der Spange 109 aus dem Aufnahmeraum 110 des Adapters 102 entnehmbar ist. Hierzu wird das Mobiltelefon 107 durch den Zugang 112 aus dem Aufnahmeraum 110 gezogen und gelangt hierbei mit seiner Rückseite 107b zunächst in Anlage an den Rand 108a des Grundkörpers 108 des Adapters 102 und dann in Anlage an die Haltevorrichtung 103. Um ein Herausziehen bzw. Einschieben des Mobiltelefons 107 aus dem Aufnahmeraum 110 bzw. in den Aufnahmeraum 110 zu erleichtern sind der Rand 108a des Grundkörpers 108 und die Haltervorrichtung 103 im Bereich des Zugangs 112 als Rampe 150 ausgebildet. Hierdurch wird in der Zwischenstellung Z107 die Verformung der Spange 109 gering gehalten und damit auch der maximal auf das Display 107a wirkende Druck reduziert.

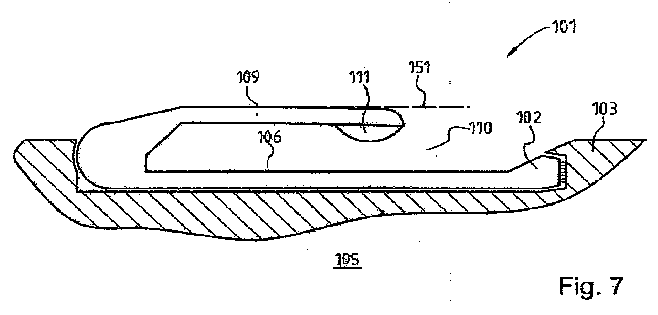

In der Figur 7 ist der Adapter 102 mit leerem Aufnahmeraum 110 gezeigt. In dieser Ansicht ist im Vergleich mit einer Hilfslinie 151, welche zeigt, in welcher Stellung die Spange 109 bei eingelegtem Mobiltelefon steht, erkennbar, dass die Spange 109 bei leerem Aufnahmeraum 110 eine Vorspannung bzw. Verformung in Richtung der Auflagefläche 106 aufweist, um ein eingelegtes Mobiltelefon mit einem angemessenen Druck fixieren zu können. Erfindungsgemäß ist bei allen drei Ausführungsvarianten vorgesehen, unterschiedliche Anlagemittel 111 zu verwenden, um das jeweils zu haltende Mobiltelefon abhängig von seiner Dicke D107 in der Haltestellung A107 mit einem angemessenen Druck beaufschlagen zu können. Hierzu ist es erfindungsgemäß vorgesehen, dass Anlagemittel austauschbar zu gestalten.

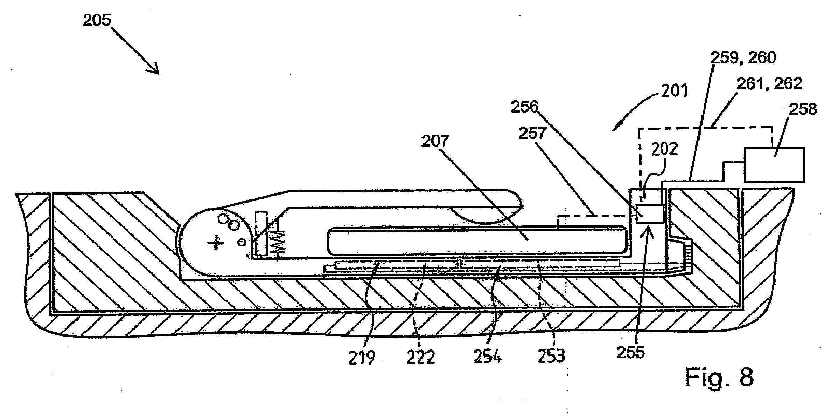

In der Figur 8 ist eine teilweise geschnittene Seitenansicht einer dritten Ausführungsvariante eines erfindungsgemäßen Mobiltelefonintegrationssystems 201 gezeigt. Bezüglich des gesamten mechanischen Aufbaus wird hier auf die Beschreibung zu der ersten Ausführungsvariante verwiesen. Im Unterschied hierzu ist ein Adapter 202 nicht nur mit einer induktiven Ladeeinheit 222 als erster Schnittstelle 219, sondern auch mit einer Koppelantenne 253 als zweiter Schnittstelle 254 ausgestattet. Gemäß einer Ausführungsvariante umfasst der in der Figur 8 gezeigte Adapter 202 entsprechend der schematischen Darstellung als dritte Schnittstelle 255 zusätzlich auch noch eine Datenkommunikationseinrichtung 256 über die zu einem Mobiltelefon 207 eine drahtlose Datenkommunikationsverbindung 257 herstellbar ist. Diese weist vorzugsweise eine Übertragungsrate von wenigstens 56 Mbps auf. Die Datenkommunikationseinrichtung 256 steht weiterhin mit einer Elektronik 258 des Fahrzeugs 205 in Datenkommunikationsverbindung. Hierbei erfolgt die Datenkommunikation mit der Elektronik 258 des Fahrzeug 205 wahlweise über eine drahtgebundene Datenkommunikationsverbindung 259 oder über eine drahtlose Datenkommunikationsverbindung 261. Hierbei ist die Datenkommunikationsverbindung 259 durch eine Kabelverbindung 260 hergestellt. Hierbei ist die drahtlose Datenkommunikationsverbindung 261 durch eine Funkverbindung 262 hergestellt. Die drahtlose Datenkommunikationsverbindung 261 weist vorzugsweise eine Übertragungsrate von wenigstens 56 Mbps auf.

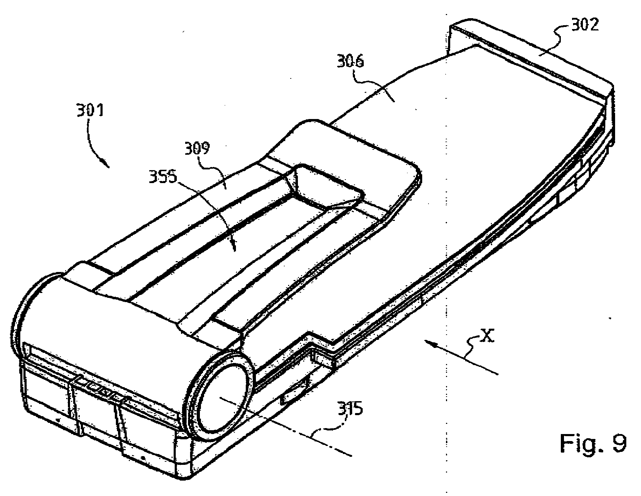

In der Figur 9 ist eine perspektivische Ansicht einer vierten Ausführungsvariante eines erfindungsgemäßen Mobiltelefonintegrationssystems 301 gezeigt. Von dem Mobiltelefonintegrationssystems 301 ist jedoch nur ein Adapter 302 gezeigt . Eine Haltevorrichtung und eine Konsole sind nicht gezeigt. Über einer Auflagefläche 306 ragt eine Spange 309, welche um eine Drehachse 315 gegen ein nicht dargestelltes Spannmittel von der Auflagefläche 306 weg schwenkbar ist. Die Spange 309 ist U-förmig ausgebildet und weist einen Freiraum 355 auf, durch welchen ein in den Adapter 302 eingelegtes Mobiltelefon sichtbar wäre.

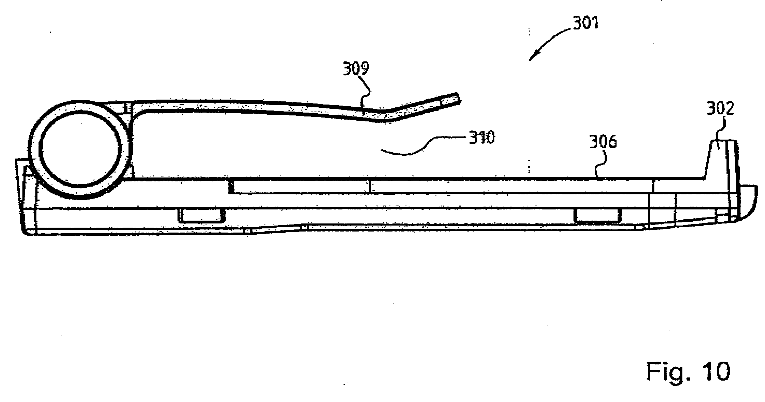

In der Seitenansicht der Figur 10, welche den Adapter 302 aus einer Pfeilrichtung X zeigt, ist ein Aufnahmeraum 310 erkennbar, welcher zwischen der Spange 309 und der Auflagefläche 306 für ein nicht dargestelltes Mobiltelefon gebildet ist.

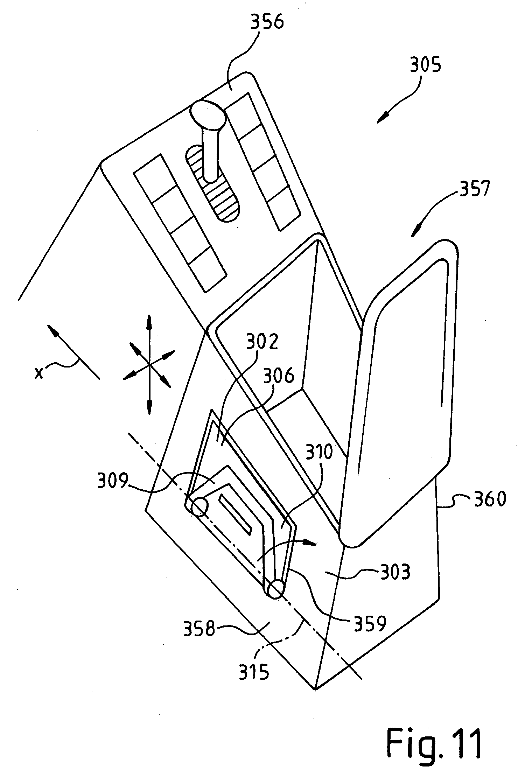

In der Figur 11 ist der in den Figuren 9 und 10 gezeigte Adapter 302 schematisch nochmals in einer besonderen Einbauposition dargestellt. Zur Erläuterung der Einbausituation zeigt die Figur 11 in perspektivischer Ansicht eine Mittelkonsole 356 eines Fahrzeugs 305, wobei die Mittelkonsole 356 ein Staufach 357 mit einer Seitenwange 358 umfasst. Die Seitenwange 358 bildet eine Haltevorrichtung 303 für den Adapter 302, wobei dieser hierzu eine Ausnehmung 359 aufweist, in welche der schematisch dargestellte Adapter 302 eingerastet ist, so dass sich bezüglich der Einbindung des Adapters 302 eine Einbausituation ergibt, welche mit der in der Figur 7 gezeigten Einbausituation vergleichbar ist. Hierbei ist der Adapter 302 in der in der Figur 11 gezeigten Einbausituation in Bezug auf ein Fahrzeug 305 so orientiert, dass die Drehachse 315 der Spange 309 des Adapters 302 mit einer Abweichung von maximal 30° in eine Fahrtrichtung x des Fahrzeugs 305 ausgerichtet ist, wobei das in den Aufnahmeraum 310 eingelegte, nicht dargestellte Mobiltelefon von der Schwerkraft in Richtung der Drehachse 315 der Spange 309 gezogen wird. Hierdurch lässt sich das Mobiltelefon in einem für den Fahrer bequem zugänglichen Bereich zwischen Fahrersitz und Mittelkonsole sicher anordnen. Erfindungsgemäß ist es auch vorgesehen, für ein Mobiltelefon des Beifahrers an einer gegenüberliegenden Wandung 360 einen weiteren Adapter anzuordnen, so dass das Mobiltelefonintegrationssystem zwei Adapter und zwei Haltevorrichtungen umfasst.

Erfindungsgemäß ist es auch vorgesehen, die erste Schnittstelle als Koppelantenne auszubilden und auf eine drahtlose oder drahtgebundene Energieversorgung des Mobiltelefons zu verzichten.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Mobiltelefonintegrationssystem
- 2: Adapter
- 3: Haltevorrichtung
- 4: Konsole von 5
- 5: Fahrzeug
- 6: Auflagefläche von 2
- 7: Mobiltelefon
- 7a: Display von 7
- 7b: Rückseite von 7
- 7c: oberen Seitenwand von 7
- 7d: unteren Seitenwand von 7
- 7e: linken Seitenwand von 7
- 7f: rechten Seitenwand von 7
- 8: Grundkörper
- 8a: Rand von 8
- 9: Spange
- 9a: freies Ende von 9
- 10: Aufnahmeraum von 2
- 11: Anlagemittel von 9
- 12: Zugang zu 10
- 13: Spannmittel
- 13a: Feder
- 14: Dämpfungsmittel
- 14a: Schaumstoffklotz
- 15: Drehachse von 9 an 8
- 16: Rastkopf von 9
- 17, 18: Rastmulde für 16
- 19, 20: erste Schnittstelle
- 21: drahtlose Ladeschnittstelle
- 22: induktive Ladeeinheit
- 23: drahtgebundene Ladeschnittstelle
- 24: Stecker an 25
- 25: Ladekabel
- 26: Steckbuchse an 7
- 27: el. Steckverbindung zwischen 2 und 3

- 101: Mobiltelefonintegrationssystem

- 102: Adapter
- 103: Haltevorrichtung

- 105: Fahrzeug
- 106: Auflagefläche von 102
- 107: Mobiltelefon
- 107a: Display von 107
- 107b: Rückseite von 107
- 108: Grundkörper von 102
- 108a: Rand von 108
- 109: Spange
- 109a: freies Ende von 109
- 110: Aufnahmeraum von 102
- 111: Anlagemittel von 109
- 112: Zugang zu 110

- 201: Mobiltelefonintegrationssystem
- 202: Adapter
- 205: Fahrzeug
- 207: Mobiltelefon
- 219: erste Schnittstelle
- 222: induktive Ladeeinheit
- 253: Koppelantenne
- 254: zweite Schnittstelle
- 255: dritte Schnittstelle
- 256: Datenkommunikationseinrichtung
- 257: Datenkommunikationsverbindung
- 258: Elektronik von 205
- 259: Datenkommunikationsverbindung
- 260: Kabelverbindung
- 261: Datenkommunikationsverbindung
- 262: Funkverbindung

- 301: Mobiltelefonintegrationssystem
- 302: Adapter
- 303: Haltevorrichtung
- 305: Fahrzeug
- 306: Auflagefläche
- 309: Spange

- 310: Aufnahmeraum
- 315: Drehachse
- 355: Freiraum
- 356: Mittelkonsole
- 357: Staufach
- 358: Wandung von 357
- 359: Ausnehmung
- 360: weitere Wandung von 357

- A7: Haltestellung von 7
- A107: Haltestellung von 107
- A9: Spannstellung von 9
- A109: Spannstellung von 109
- B9: Freigabestellung von 9
- C9: Überlaststellung von 9
- L7: Länge von 7
- M6: Mittelbereich von 6
- w, w': Drehrichtung von 9 um 15
- x: Fahrtrichtung von 305
- Z107: Zwischenstellung von 107

- B7: Breite von 7
- L7: Länge von 7
- D7: Dicke von 7
- D107: Dicke von 107

## Patentansprüche

1. Mobiltelefonintegrationssystem (1; 101; 201; 301) umfassend einen Adapter (2; 102; 202; 302) und eine Haltevorrichtung (3; 103),
- wobei der Adapter (2; 102; 202; 302) eine Auflagefläche (6; 106; 306) umfasst,
- wobei auf der Auflagefläche (6; 106; 306) ein Mobiltelefon (7; 107) ablegbar ist,
- wobei die Haltevorrichtung (3; 103) an einem Fahrzeug (5; 105) befestigt ist,
- wobei der Adapter (2; 102; 202; 302) an der Haltevorrichtung (3; 103) lösbar gehalten ist und einen Grundkörper (8; 108) umfasst,
- wobei der Adapter (2; 102; 202; 302) wenigstens eine Schnittstelle (19, 20; 219; 254) zu dem Mobiltelefon (7; 107) umfasst,
- wobei der Adapter (2; 102; 202; 302) eine Spange (9; 109; 309) umfasst, welche von einem Rand (8a; 108a) des Grundkörpers (8; 108) aus in einer Spannstellung (A9; A109; 309) unter Vorspannung in Richtung der Auflagefläche (6; 106; 306) über die Auflagefläche (6; 106; 306) ragt,
- wobei ein Mobiltelefon (7; 107) zwischen ein freies Ende (9a; 109a) der Spange (9; 109; 309) und die Auflagefläche (6; 106; 306) in eine Haltestellung (A7; A107) einschiebbar ist,
- und wobei das Mobiltelefon (7; 107) in der Haltestellung (A7; A107) zwischen der Spange (9; 109; 309) und der Auflagefläche (6; 106; 306) durch die auf das Mobiltelefon (7; 107) drückende Spange (9; 109; 309) derart fixiert ist, dass dieses in der Haltestellung (A7; A107) auch im Fahrbetrieb des Fahrzeugs (5; 105) verschiebesicher gehalten ist,
**dadurch gekennzeichnet, dass** die Spange (9; 109; 309) mit ihrem freien Ende (9a; 109a) bis in einen Mittelbereich (M6) der Auflagefläche (6; 106; 306) ragt, wobei die Spange (9; 109; 309) an dem auf der Auflagefläche (6; 106; 306) liegenden Mobiltelefon (7; 107) anliegt.

2. Mobiltelefonintegrationssystem nach Anspruch 1, **dadurch gekennzeichnet, dass** eine erste Schnittstelle (19, 20) des Adapters (2; 102; 202; 302) als Ladeschnittstelle ausgebildet ist,
- wobei die Ladeschnittstelle als drahtlose Ladeschnittstelle (21) ausgebildet ist, über welche drahtlos elektrische Energie von einer induktiven Ladeeinheit (22) des Adapters (2; 102; 202; 302) an eine Empfängerspule des Mobiltelefons (7; 107) übertragbar ist oder
- wobei die Ladeschnittstelle als drahtgebundene Ladeschnittstelle (23) ausgebildet ist, welche ein mit einem Stecker (23) ausgestattetes Ladekabel (24) umfasst, welches derart aus dem Adapter (2; 102; 202; 302) geführt ist, dass mit dem Stecker (23) unterschiedliche Steckpositionen erreichbar sind.

3. Mobiltelefonintegrationssystem nach Anspruch 2, **dadurch gekennzeichnet, dass** eine zweite Schnittstelle (254) des Adapters (2; 102; 202; 302) als Antennenkoppelschnittstelle ausgebildet ist, über welche Antennensignale einer Koppelantenne (253) des Adapters (2; 102; 202; 302) von dem Mobiltelefon (7; 107) empfangbar und an das Mobiltelefon (7; 107) übertragbar sind.

4. Mobiltelefonintegrationssystem nach einem der vorhergehenden Ansprüche, **dadurch gekennzeichnet, dass** die Spange (109; 309) entweder drehfest an dem Grundkörper (108) angeordnet ist und die Vorspannung der Spange (109; 309) durch eine elastische Verformung der Spange (109; 309) erzeugt wird oder dass die Spange (9) schwenkbar um eine Drehachse (15; 315) an dem Grundkörper (8) angeordnet ist und der Adapter (2) ein Spannmittel (13) umfasst, welches zwischen dem Grundkörper (8) des Adapter (2) und der Spange (9) angeordnet ist und die Vorspannung erzeugt.

5. Mobiltelefonintegrationssystem nach Anspruch 4, **dadurch gekennzeichnet, dass** die Spange (9), aus der Spannstellung (A9) um ihre eine Drehachse (15; 315) in eine Freigabestellung (B9) schwenkbar ist.

6. Mobiltelefonintegrationssystem nach Anspruch 4, **dadurch gekennzeichnet, dass** der Adapter (2; 202; 302) ein Dämpfungsmittel (14) umfasst, welches bei einer Bewegung der Spange (9) aus der Freigabestellung (B9) in die Spannstellung (A9) derart gegen eine Schließkraft des Spannmittels (13) wirkt, dass die Bewegungsgeschwindigkeit der Spange (9) zu der Spannstellung (A9) hin reduziert wird.

7. Mobiltelefonintegrationssystem nach Anspruch 2, **dadurch gekennzeichnet, dass** eine zweite drahtgebundene Koppelschnittstelle ausgebildet ist, welche ein mit einem Stecker ausgestattetes Antennenkabel umfasst, welches derart aus dem Adapter geführt ist, dass mit dem Stecker unterschiedliche Steckpositionen erreichbar sind.

8. Mobiltelefonintegrationssystem nach einem der vorhergehenden Ansprüche, **dadurch gekennzeichnet, dass** der Grundkörper (9; 109; 309) eine elastisch verformbare Matte umfasst, welche die Auflagefläche (6; 106; 306) wenigstens teilweise bildet.

9. Mobiltelefonintegrationssystem nach einem der vorhergehenden Ansprüche, **dadurch gekennzeichnet, dass** die Drehachse (315) der Spange (309) mit einer Abweichung von maximal 30° in eine Fahrtrichtung (x) des Fahrzeugs (5, 105, 305) ausgerichtet ist, wobei das in den Aufnahmeraum (10, 310) eingelegte Mobiltelefon (7; 107) von der Schwerkraft in Richtung der Drehachse (315) der Spange (309) gezogen wird.

10. Mobiltelefonintegrationssystem (201) nach einem der vorhergehenden Ansprüche, **dadurch gekennzeichnet, dass** der Adapter (202) als dritte Schnittstelle (255) eine drahtlose Datenkommunikationseinrichtung (256) umfasst, wobei durch die Datenkommunikationseinrichtung (256) eine drahtlose Datenkommunikationsverbindung (257) mit einem in dem Fahrzeug (205), befindlichen Mobiltelefon (207) bereitgestellt ist, wobei die Datenkommunikationseinrichtung (256) zur weiteren Datenkommunikation an eine Elektronik (258) des Fahrzeugs (205) angeschlossen ist.

11. Mobiltelefonintegrationssystem (201) nach Anspruch 10, **dadurch gekennzeichnet, dass** die Datenkommunikation zwischen der Datenkommunikationseinrichtung (256) und der Elektronik (258) des Fahrzeugs (205) drahtgebunden oder drahtlos erfolgt, wobei eine drahtgebundene Datenkommunikationsverbindung (259) durch eine Kabelverbindung (260) nach dem USB-Standard gebildet ist bzw. wobei eine drahtlose Datenkommunikationsverbindung (261) durch eine Funkverbindung (262) gebildet ist.

12. Mobiltelefonintegrationssystem (201) nach Anspruch 10 oder 12, **dadurch gekennzeichnet, dass** die drahtlose Datenkommunikationsverbindung (257; 261) nach dem sogenannten WIFI-Standard bzw. entsprechend dem Standard IEEE 802.11 erfolgt.

## Claims

1. Mobile phone integration system (1; 101; 201; 301) comprising an adapter (2; 102; 202; 302) and a holding device (3: 103),
- wherein the adapter (2; 102; 202; 302) comprises a support surface (6; 106; 306),
- wherein a mobile telephone (7; 107) can be placed on the support surface (6; 106; 306),
- wherein the holding device (3; 103) is fixed onto a vehicle (5; 105),
- wherein the adapter (2; 102; 202; 302) is releasably attached to the holding device (3; 103), and comprises a base body (8; 108),
- wherein the adapter (2; 102; 202; 302) comprises at least one interface (19; 20; 219; 254) to the mobile telephone (7; 107)
- wherein the adapter (2; 102; 202; 302) comprises a clip (9; 109; 309), which protrudes in a clamping position (A9; Al09; 309) from an edge (8a; 108a) of the base body (8; 108) and is preloaded in the direction of the support surface (6; 106; 306) above the support surface (6; 106; 306),
- wherein a mobile telephone (7; 107) can be inserted into a holding position (A7; A107) between a free end (9a; 109a) of the clip (9; 109; 309) and the support surface (6; 106; 306);
- and wherein the mobile telephone (7; 107) is fixed in the holding position (A7; A107) between the clip (9; 109: 309) and the support surface (6; 106; 306) by the clip (9; 109: 309) pressing against the mobile phone (7; 107) in such a way that the latter is held securely in the holding position (A7; A107) against shifting when the vehicle (5, 105) is being driven,
**characterised in that** the clip {9; 109; 309) with its free end (9a; 109a) protrudes into a central region (M6) of the support surface (6; 106; 306), wherein the clip (9; 109; 309) is applied to the mobile telephone (7; 107) lying on the support surface (6; 106; 306).

2. Mobile phone integration system according to claim 1, **characterised in that** a first interface (19, 20) of the adapter (2; 102; 202; 302) is designed as a charging interface,
- wherein the charging interface is configured as a wireless charging interface (21) via which electrical energy is transferred wirelessly from an inductive charging unit (22) of the adapter (2; 102; 202; 302) to a receiver coil of the mobile telephone (7; 107), or
- wherein the charging interface is configured as a wired charging interface (23) having a charging cable (24) equipped with a plug (23), which is led out of the adapter (2; 102; 202; 302) in such a way that different plug positions of the plug (23) can be achieved.

3. Mobile phone integration system according to claim 2, **characterised in that** a second interface (254) of the adapter (2; 102; 202; 302) is formed as an antenna coupling interface via which antenna signals of a coupling antenna (253) of the adapter (2; 102; 202; 302) of the mobile telephone (7; 107) can be received by and transferred to the mobile telephone (7; 107).

4. Mobile phone integration system according to one of the preceding claims, **characterised in that** the clip (109; 309) is either rotatably fixed to the base body (108) and the pre-loading of the clip (109; 309) is produced through elastic deformation of the clip (109; 309), or that the clip (9) is arranged to be pivotable about an axis of rotation (15; 315) on the base body (8), wherein the adapter (2) comprises a clamping means (13) which is arranged between the base body (8) of the adapter (2) and the clip (9) to produce the pre-loading.

5. Mobile phone integration system according to claim 4, **characterised in that** the clip (9) is pivotable about a rotational axis (15; 315) from the clamping position (A9) into a release position (B9).

6. Mobile phone integration system according to claim 4, **characterised in that** the adapter (2; 202; 302) comprises a damping means (14) which, upon movement of the clip (9) from the release position (89) into the clamping position (A9), so acts against a clamping force of the clamping device (13) that the speed of movement of the clip (9) towards the clamping position (A9) is reduced.

7. Mobile phone integration system according to claim 2, **characterised in that** a second wired coupling interface is formed comprising an antenna cable equipped with a plug, which is led out of the adapter in such a way that different plug positions of the plug can be achieved.

8. Mobile phone integration system according to any one of the preceding claims, **characterised in that** the base body (9; 109; 309) comprises a resiliently deformable mat which at least partially forms the support surface (6; 106; 306).

9. Mobile phone integration system according to any one of the preceding claims, **characterised in that** the rotation axis (315) of the clip (309) is aligned with a deviation of 30° at most in a direction of travel (x) of the vehicle (5, 105, 305), wherein the mobile telephone (7; 107) inserted in the receiving space (10, 310) is drawn in the direction of the axis of rotation (315) of the clip (309) under the force of gravity.

10. Mobile telephone integration system (201) according to any one of the preceding claims, **characterised in that** the adapter (202) comprises a third interface (255) in the form of a wireless data communication device (256), wherein a wireless data communication link (257) is established with a mobile telephone (207) located in the vehicle (205) via the data communication device (256), wherein the said data communication device (256) is connected to an electronic system (258) of the vehicle (205) for further data communication.

11. Mobile phone integration system (201) according to claim 10, **characterised in that** data communication between the data communication device (256) and the electronic system (258) of the vehicle (205) is effected by wire or wirelessly, wherein a wired data communication link (259) is formed by a USB standard cable connection (260), or wherein a wireless data communication link (261) is formed by a radio link (262).

12. Mobile phone integration system (201) according to claim 10 or 12, **characterised in that** the wireless data communication link (257; 261) takes place according to the so-called WiFi standard or according to the IEEE 802.11 standard.

## Revendications

1. Système d'intégration de téléphone mobile (1 ; 101 ; 201 ; 301) comprenant un adaptateur (2 ; 102 ; 202 ; 302) et un système de maintien (3 ; 103),
- l'adaptateur (2 ; 102 ; 202 ; 302) comprenant une surface d'appui (6 ; 106 ; 306),
- un téléphone mobile (7 ; 107) pouvant être posé sur la surface d'appui (6 ; 106 ; 306),
- le dispositif de maintien (3 ; 103) étant fixé à un véhicule (5 ; 105),
- l'adaptateur (2 ; 102 ; 202 ; 302) étant maintenu de manière amovible sur le dispositif de maintien (3 ; 103) et comprenant un corps de base (8 ; 108),
- l'adaptateur (2 ; 102 ; 202 ; 302) comprenant au moins une interface (19, 20 ; 219 ; 254) avec le téléphone mobile (7 ; 107),
- l'adaptateur (2; 102 ; 202; 302) comprenant une manille (9; 109; 309) qui dépasse d'un bord (8a ; 108a) du corps de base (8 ; 108) dans une position de serrage (A9 ; A109 ; 309) en pré-tension en direction de la surface d'appui (6 ; 106 ; 306) au-dessus de la surface d'appui (6 ; 106 ; 306),
- un téléphone mobile (7 ; 107) pouvant être inséré entre une extrémité libre (9a ; 109a) de la manille (9 ; 109 ; 309) et la surface d'appui (6 ; 106 ; 306) dans une position de maintien (A7 ; A107),
- et le téléphone mobile (7 ; 107) étant fixé dans la position de maintien (A7 ; A107) entre la manille (9 ; 109 ; 309) et la surface d'appui (6 ; 106 ; 306) par la manille (9 ; 109 ; 309) appuyant sur le téléphone mobile (7 ; 107) de façon à ce que celui-ci soit maintenu, avec une protection anti-déplacement, dans la position de maintien (A7 ; A107) même lorsque le véhicule (5 ; 105) est en marche,
**caractérisé en ce que** la manille (9 ; 109 ; 309) dépasse, avec son extrémité libre (9a ; 109a) jusque dans la zone centrale (M6) de la surface d'appui (6 ; 106 ; 306), la manille (9 ; 109 ; 309) s'appuyant sur le téléphone mobile (7 ; 107) se trouvant sur la surface d'appui (6 ; 106 ; 306).

2. Système d'intégration de téléphone mobile selon la revendication 1, **caractérisé en ce qu'**une première interface (19, 20) de l'adaptateur (2 ; 102 ; 202 ; 302) est conçue comme une interface de charge,
- l'interface de charge étant conçue comme une interface ce charge sans fil (21), par l'intermédiaire de laquelle de l'énergie électrique peut être transmise sans fil d'une unité de charge inductive (22) de l'adaptateur (2 ; 102 ; 202 ; 302) à une bobine réceptrice du téléphone mobile (7 ; 107) ou
- l'interface de charge étant conçue comme une interface de charge filaire (23) qui comprend un câble de charge (24) muni d'un connecteur (23), qui est guidé hors de l'adaptateur (2 ; 102 ; 202 ; 302) de façon à ce que différentes positions de connexion puissent être obtenues avec le connecteur (23).

3. Système d'intégration de téléphone mobile selon la revendication 2, **caractérisé en ce qu'**une deuxième interface (254) de l'adaptateur (2 ; 102 ; 202 ; 302) est conçue comme une interface de couplage d'antenne par l'intermédiaire de laquelle des signaux d'antenne d'une antenne de couplage (253) de l'adaptateur (2 ; 102 ; 202 ; 302) peuvent être reçus par le téléphone mobile (7 ; 107) et transmis au téléphone mobile (7 ; 107).

4. Système d'intégration de téléphone mobile selon l'une des revendications précédentes, **caractérisé en ce que** la manille (109 ; 309) est soit disposée de manière solidaire en rotation sur le corps de base (108) et la précontrainte de la manille (109 ; 309) est générée par une déformation élastique de la manille (109 ; 309) ou **en ce que** la manille (9) est disposée de manière pivotante autour d'un axe de rotation (15 ; 315) sur le corps de base (8) et l'adaptateur (2) comprend un moyen de serrage (13) qui est disposé entre le corps de base (8) de l'adaptateur (2) et de la manille (9) et génère la précontrainte.

5. Système d'intégration de téléphone mobile selon la revendication 4, **caractérisé en ce que** la manille (9) peut être pivotée de la position de serrage (A9) autour de son axe de rotation (15 ; 315) vers une position de libération (B9).

6. Système d'intégration de téléphone mobile selon la revendication 4, **caractérisé en ce que** l'adaptateur (2 ; 202 ; 302) comprend un moyen d'amortissement (14) qui agit, lors d'un mouvement de la manille (9) de la position de libération (B9) vers la position de serrage (A9) à l'encontre d'une force de fermeture du moyen de serrage (13) de façon à ce que la vitesse de déplacement de la manille (9) en direction de la position de serrage (A9) est réduite.

7. Système d'intégration de téléphone mobile selon la revendication 2, **caractérisé en ce qu'**une deuxième interface de couplage filaire est prévue, qui comprend un câble d'antenne muni d'un connecteur, qui est guidé hors de l'adaptateur de façon à ce que différentes positions de connexion puissent être obtenues avec le connecteur.

8. Système d'intégration de téléphone mobile selon l'une des revendications précédentes, **caractérisé en ce que** le corps de base (9 ; 109 ; 309) comprend une natte déformable élastiquement qui constitue au partiellement la surface d'appui (6 ; 106 ; 306).

9. Système d'intégration de téléphone mobile selon l'une des revendications précédentes, **caractérisé en ce que** l'axe de rotation (315) de la manille (309) est orientée, avec un écart de 30° maximum, dans une direction de déplacement (x) du véhicule (5, 105, 305), le téléphone mobile (7 ; 107) inséré dans l'espace de logement (10, 310) étant tiré par la force de gravité en direction de l'axe de rotation (315) de la manille (309).

10. Système d'intégration de téléphone mobile selon l'une des revendications précédentes, **caractérisé en ce que** l'adaptateur (202) comprend, en tant que troisième interface (255), un dispositif de communication de données sans fil (256), le dispositif de communication de données (256) permettant d'établir une liaison de communication de données (257) avec un téléphone mobile (207) se trouvant dans le véhicule (205), le dispositif de communication de données (256) étant connecté, pour une communication de données supplémentaire, à une électronique (258) du véhicule (205).

11. Système d'intégration de téléphone mobile (201) selon la revendication 10, **caractérisé en ce que** la communication de données entre le dispositif de communication de données (256) et l'électronique (258) du véhicule (205) a lieu de manière filaire ou sans fil, une liaison de communication de données filaire (259) étant établie à l'aide d'une liaison par câble (260) selon la norme USB ou une liaison de communication de données sans fil (261) étant établie à l'aide d'une liaison radio (262).

12. Système d'intégration de téléphone mobile (201) selon la revendication 10 ou 12, **caractérisé en ce que** la liaison de communication de données (257 ; 261) est établie selon la norme WIFI ou selon la norme IEEE 802.11.
